(19) Europäisches Patentamt
European Patent Office
Office européen des brevets

(11) **EP 1 862 269 B1**

(12) **EUROPÄISCHE PATENTSCHRIFT**

(45) Veröffentlichungstag und Bekanntmachung des Hinweises auf die Patenterteilung:
**24.11.2010   Patentblatt 2010/47**

(51) Int Cl.:
***B25J 9/16*** *(2006.01)*

(21) Anmeldenummer: **07009285.3**

(22) Anmeldetag: **09.05.2007**

(54) **Verfahren zur Ermittlung einer benötigten Lackmenge**

Method for the determination of the required lacquer quantity

Prodédé pour déterminer la quantité de laque nécessaire

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.05.2006   DE 102006026051**

(43) Veröffentlichungstag der Anmeldung:
**05.12.2007   Patentblatt 2007/49**

(73) Patentinhaber: **ABB AG**
**68309 Mannheim (DE)**

(72) Erfinder:
• **Eickmeyer, Dietmar, Dr.-Ing.**
  **61169 Friedberg (DE)**
• **Kristen, Jürgen**
  **35428 Langgöns (DE)**

(74) Vertreter: **Miller, Toivo et al**
**ABB Patent GmbH,**
**Wallstadter Strasse 59**
**68526 Ladenburg (DE)**

(56) Entgegenhaltungen:
**EP-A- 0 983 798    EP-A- 1 074 306**
**EP-A- 1 252 935**

**EP 1 862 269 B1**

**Beschreibung**

Verfahren zur Ermittlung einer benötigten Lackmenge und Verwendung des Verfahrens zum Betrieb von Lackierrobotern

Es wird ein Verfahren zur Ermittlung einer benötigten Lackmenge für den Lackiervorgang eines Lackierroboters sowie die Verwendung des Verfahrens zum Betrieb von Lackierrobotern angegeben.

Es ist allgemein bekannt, die beim Betrieb eines Lackierroboters für einen bestimmten Lackiervorgang benötigte Lackmenge von Hand einzustellen. Dieser Einstellung liegt im Allgemeinen eine grobe Schätzung des Lackverbrauchs zu Grunde und entsprechend muss ein hoher Sicherheitsfaktor berücksichtigt werden, um die Versorgung des Roboters mit Lack während des gesamten Lackiervorgangs sicherzustellen.

Bei dem aus (EP 1252935 A2) bekannten Verfahren wird die erforderliche Menge an Beschichtungsmaterial von einem Steuersystem vor dem Beschichtungsprozess errechnet. Die Steuerung simuliert den Betrieb der Maschine während der Beschichtung beim anschließenden Beschichtungsprozess einschließlich der Bewegungsabläufe. Die bei der Simulation errechneten Mengen werden durch Faktoren korrigiert, mit denen den in der Realität üblichen Betriebsbedingungen Rechnung getragen werden kann.

Eine zu lösende Aufgabe besteht darin, ein Verfahren zur Ermittlung einer benötigten Lackmenge für den Lackiervorgang eines Lackierroboters anzugeben, bei dem mit einem geringen Sicherheitsfaktor gearbeitet werden kann.

Gemäß einer Ausführungsform des Verfahrens ist es vorgesehen, dass der geplante Bewegungsablauf des Lackierroboters zusammen mit den Lackierparametern des Lackierroboters verwendet wird, um einen Integrationswert für die benötigte Lackmenge zu ermitteln.

Gemäß einer Ausführungsform des Verfahrens ist es ferner vorgesehen, dass ein Korrekturfaktor für den Integrationswert ermittelt wird.

In einem weiteren Verfahrensschritt kann aus dem Integrationswert und dem Korrekturfaktor ein Startwert als Grundlage für den Start eines lernfähigen Systems gebildet werden.

Das beschriebene Verfahren kann insbesondere vorteilhaft in der industriellen Lackiertechnik angewendet werden, wo die Formenvielfalt und die Komplexität der zu lackierenden Teile stetig zunimmt, wobei gleichzeitig die Farbenvielfalt zunimmt. Insbesondere ist das Verfahren geeignet zum Einsatz bei automatischen Lackierrobotern. Sowohl die hohe Variantenvielfalt der Geometrien als auch die hohe Anzahl von kundenspezifischen Farben, die teilweise nur wenige Male pro Jahr lackiert werden, zeigen, dass ein hoher Individualitätsfaktor der lackierten Teile vorliegt und identische Lackiervorgänge nur sehr selten in großer Anzahl durchgeführt werden.

Das beschriebene Verfahren kommt besonders vorteilhaft dort zum Einsatz, wo häufig die Farben des Lackierroboters gewechselt werden müssen, da insbesondere der Wechsel zwischen zwei Farben unvermeidlich zu Lackverlusten führt. Mit Hilfe des hier beschriebenen Verfahrens können Lackverluste reduziert werden, in dem eine möglichst genau vorher berechnete Lackmenge für einen Lackiervorgang verwendet wird.

Zur Vorherberechnung der benötigten Lackmenge kommt insbesondere ein Integrationsvorgang in Betracht, bei dem anhand des vorgegebenen Bewegungsprogramms des Roboters eine Berechnung der Lackmenge vorab durchgeführt wird. Hierbei wird mittels eines Integrationsvorganges aus der jeweiligen Soll-Ausflussmenge von Lack und der Bewegung beziehungsweise der Bewegungszeit des Lackroboters ein theoretischer Wert des gesamten Lackverbrauches ermittelt.

Beispielsweise kann bei konstanter Ausflussrate, d. h. Lackausfluss pro Zeiteinheit, diese einfach mit der Bewegungszeit des Lackroboters multipliziert werden. In anderen Fällen kann die zeitabhängige Ausflussrate über die Bewegung des Lackroboters integriert werden.

Vorzugsweise wird bei diesem Integrationsvorgang nur der Soll-Bewegungswert des Roboters berücksichtigt. Dabei werden insbesondere Abweichungen von den Soll-Bewegungswerten an Kurven oder Umorientierungspunkten des Roboters nicht berücksichtigt. Diese Abweichungen entstehen dadurch, dass der Roboter nur über ein endliches Beschleunigungsvermögen verfügt. Dadurch ist die Dauer der Lack-Applikation und damit auch der daraus ermittelte Verbrauchswert mit einem Fehler behaftet, der jedoch dadurch aufgewogen wird, dass sich die Berechnung, die sich ausschließlich auf die Soll-Bewegungswerte des Roboters stützt, sehr einfach gestaltet und mit wenig Rechen- und Zeitaufwand durchgeführt werden kann.

Um die Nicht-Berücksichtigung der Kinematik des Roboters bei der Integration beziehungsweise bei der Ermittlung des theoretischen Lackverbrauchs wenigstens teilweise zu kompensieren, wird gemäß dem hier beschriebenen Verfahren ein Korrekturfaktor ermittelt, aus dem zusammen mit dem Integrationswert ein Startwert für ein lernfähiges System ermittelt wird.

Als lernfähiges System kommt beispielsweise ein System auf der Basis wenigstens einen künstlichen neuronalen Netzes in Betracht, das mit Hilfe einer Lernphase aus einem Startwert für eine benötigte Lackmenge eine exakt berechnete benötigte Farbmenge ermitteln kann. Ein solches lernfähiges System ermittelt bei einer repräsentativen Anzahl von Lackiervorgängen bei gleicher geometrischer Form und zu lackierender Farbe die jeweils tatsächlich benötigte Farbmenge und verwendet diesen Wert als Ausgangsbasis für die benötigte Lackmenge des nächsten nach Form und Farbe identischen Teils. Für dieses Verfahren sind einige real durchlaufene Lackiervorgänge notwendig, um den exakt berechneten Lackverbrauch für die jeweilige Kombination einer geometrischen Form mit einer bestimmten Farbe zu ermitteln. Je exakter der Startwert für das lernfähige System ermittelt wird, umso weniger Lackverlust entsteht in der Lernphase des lernfähigen Systems, da die Anzahl der realen Lackierdurchläufe dadurch verringert werden kann.

Mit Hilfe des hier beschriebenen Verfahrens kann ein möglichst exakter Startwert für die benötigte Lackmenge vorherberechnet werden, ohne dass reale Lackierdurchläufe für ein und denselben Lackiervorgang durchlaufen werden müssen, und die Lackverluste während der Lernphase des lernfähigen Systems können minimiert werden. Ohne Verwendung des hier beschriebenen Verfahrens müsste als Ausgangsstartwert für das lernfähige System ein geschätzter Wert mit einem sehr hohen Sicherheitszuschlag verwendet werden, was sowohl die Anzahl der realen Lackierdurchläufe für den Lernvorgang als auch die Lackverluste erhöhen würde.

Gemäß einer Ausführungsform des Verfahrens wird vor Bildung des Startwertes eine Entscheidung getroffen, die den aktuellen Lackiervorgang in Beziehung setzt zu vorangegangenen Lackiervorgängen. Hierbei wird insbesondere zwischen zwei Fällen unterschieden:

i) Der aktuelle Lackiervorgang ist lediglich eine Modifikation irgendeines vorangegangenen Lackiervorgangs.

ii) Der aktuelle Lackiervorgang ist ein neuer Lackiervorgang und stellt nicht die Modifikation irgendeines vorangegangenen Lackiervorgangs dar.

Gemäß dieser Variante des Verfahrens ist also eine Unterscheidung zu treffen, inwiefern der Lackiervorgang lediglich eine Modifikation irgendeines vorangegangenen Lackiervorgangs darstellt oder nicht. Hierbei ist insbesondere zu berücksichtigen, dass in einer in der Praxis verwendeten Lackierlinie von den hierfür zuständigen Bedienern häufig Parameteränderungen für den Lackiervorgang vorgenommen werden, die den Lackiervorgang zwar gegenüber einer Vorversion des Lackiervorgangs abändern, aber nur eine leicht geänderte Variante erzeugen.

Parameteränderungen können insbesondere dann erforderlich werden, wenn bei der Lackierung Fehlstellen auftreten, wie beispielsweise im eine leichte Unterbeschichtung im Schwellerbereich von Kraftfahrzeugen, was ursächlich beispielsweise auf eine Schwankung der Lackcharge, jahreszeitlich bedingte Klimaänderungen oder die Einführung einer neuen Farbe rückführbar ist. Da in der Linie, während der Produktion aus Zeitgründen keine Gelegenheit besteht, die Fehlerursachen genauer zu untersuchen, werden derartige Fehler üblicherweise schnellstmöglich korrigiert, indem an den entsprechenden Fehlstellen beispielsweise eine erhöhte Farbmenge ausgebracht wird. Dies führt jedoch nachteilig zu einem erhöhten Gesamtverbrauch.

Im Falle ii. kann als Korrekturfaktor ein manuell ermittelter Wert verwendet werden. Dabei wird der entsprechende Korrekturfaktor manuell, beispielsweise vom Anlagenführer, anhand empirischer Daten und/oder regelbasiert ermittelt und/oder erfasst. Dabei kann zunächst ein vergleichsweise hoher Korrekturfaktor angegeben und dann iterativ die nächste Lackierung qualitativ überprüft und der Korrekturfaktor gegebenenfalls angepasst werden, bis die gewünschte Lackqualität erreicht und der optimale Wert des Korrekturfaktors ermittelt ist.

Falls die Situation i. zutreffend ist, kann vorteilhaft für die Ermittlung des Korrekturfaktors die Kenntnis des vorangegangenen Lackiervorgangs verwendet werden. Hierbei muss es sich nicht unbedingt um den unmittelbar vorangegangenen Lackiervorgang handeln, sondern es kommt ohne Weiteres auch ein zeitlich weiter in der Vergangenheit liegender Lackiervorgang in Betracht. Wichtig ist lediglich, dass der Vorläufer-Lackiervorgang und der aktuelle Lackiervorgang möglichst wenig voneinander abweichen und nur durch geringe Parameteränderungen ineinander überführbar sind.

Ist der Vorläufer-Lackiervorgang einmal ermittelt, so kann die Information über den Vorläufer-Lackiervorgang dazu verwendet werden, den Korrekturfaktor zu ermitteln.

Insbesondere kann für die Ermittlung des Korrekturfaktors die tatsächlich benötigte Lackmenge des Vorläufer-Lackiervorgangs verwendet werden. Vorteilhafterweise werden im Laufe der Anwendung des Verfahrens die tatsächlich benötigte Lackmengen aller Lackiervorgänge in einer geeigneten Datenbank gespeichert, sodass sie jederzeit zur Berechnung von Korrekturfaktoren herangezogen werden können.

Darüber hinaus kann zur Ermittlung des Korrekturfaktors neben der tatsächlich benötigten Lackmenge des vorangegangenen Lackiervorgangs auch die in einem Integrationsschritt berechnete Lackmenge für den vorangegangenen Lackiervorgang verwendet werden. Hierbei wird im Prinzip das gleiche Integrationsverfahren verwendet, wie es für den aktuellen Lackiervorgang verwendet wird. Entweder wird der Integrationswert des vorangegangenen Lackiervorgangs nach Ermittlung desselben berechnet oder der berechnete Wert befindet sich bereits in der zugehörigen Datenbank.

Vorzugsweise werden die tatsächlich benötigte Lackmenge des vorangegangenen Lackiervorgangs und die im Integrationsschritt gewonnene, berechnete Lackmenge zur Bildung eines Quotienten verwendet, der mit dem Integrationswert, der für das aktuelle Lackierprogramm berechnet wurde, multipliziert wird.

Somit kann die aus einem ähnlichen Lackiervorgang gewonnene Erfahrung über die Abweichung zwischen der durch einfache Integration berechneten Lackmenge und der tatsächlich benötigten Lackmenge verwendet werden, um die für einen neuen Lackiervorgang wahrscheinlich benötigte Lackmenge zu ermitteln.

Im Allgemeinen wird die tatsächlich benötigte Lackmenge von der im Integrationsschritt berechneten Lackmenge abweichen, sodass sich als Korrekturfaktor ein Wert ergibt, der entweder größer oder kleiner als 1 ist.

Ferner kann in einer weiteren Ausgestaltung des Verfahrens auf besondere Weise die Unsicherheit berücksichtigt werden, die sich aus der Vermeidung der Berücksichtigung der Kinematik im Integrationsschritt ergibt. Beispielsweise kann der Unsicherheitsfaktor dadurch kompensiert werden, dass hierfür ein Erfahrungswert aus vorangegangenen Berechnungen unter Berücksichtigung der Kinematik oder auch aus Versuchen angesetzt werden.

Der Unsicherheitsfaktor der Kinematik rührt insbesondere daher, dass der Roboter nicht immer vermag die Sollgeschwindigkeit zu halten, sondern bei Änderung der Bewegungsrichtung, beim Umorientieren, Beschleunigen und Abbremsen in der Regel langsamer agiert als angestrebt ist. Darum fährt und/oder bewegt er sich im Mittel auch langsamer, was bei konstanter Lacksprührate zu einem erhöhten Lackverbrauch führt. Die jeweilig benötigte Lackmenge beziehungsweise deren Abweichung vom Sollverbrauch hängt wiederum von der Roboterbewegung ab - wenn beispielsweise ein Motorinnenraum lackiert wird, muss sich der Roboter sehr häufig umorientieren und wird stärker vom Sollwert abweichen, als beispielsweise bei einer Aussenlackierung, bei welcher im Wesentlichen Rechteckbahnen gefahren werden. Deshalb ist dieser Korrekturfaktor auch roboterprogrammbezogen.

Das hier beschriebene Verfahren lässt sich vorteilhaft vor allem bei Lackiersystemen verwenden, die eine Potentialtrennung des Lacks ermöglichen. Eine Potentialtrennung wird benötigt, wenn Lack auf Wasserbasis zum Einsatz kommt, wobei der Lack zur Steigerung des Auftragswirkungsgrades auf ein Hochspannungspotential gelegt wird. Dies bewirkt, dass sich Lackpartikel aus dem beim Applizieren entstehenden Lacknebel auf dem geerdeten zu lackierenden Objekt absetzen und somit der Auftragswirkungsgrad gesteigert wird.

Insbesondere kommt die Verwendung des Verfahrens in Betracht zum Betrieb eines Lackierroboters, der gefüllte Lackkartuschen enthält. Bei einer solchen Kartuschenlösung wird dem Zerstäuber des Roboters vor der Applikation ein Farbtank zugeführt, der ein maximales, fest vorgegebenes Volumen an Lackmaterial enthält. Diese Volumen kann mittels des hier beschriebenen Verfahrens berechnet werden. Die Befüllung der Kartusche erfolgt durch ein separates System, in einem Zustand, wo nicht lackiert wird. Es können entweder mehrere Kartuschen im alternierenden Einsatz sein oder auch nur eine einzige Kartusche, die durch einen extrem schnellen Befüllvorgang für den jeweils nächsten Lackiervorgang vorbereitet wird. Der Vorteil einer solchen Anordnung liegt darin, dass einerseits die Potentialtrennung sicher durch die mechanische Trennung des Kartuschenbehälters von der Befüllstation realisiert wird und andererseits die Anzahl der verwendbaren Farben gesteigert werden kann.

In einer anderen Ausführungsform ist es möglich, das hier beschriebene Verfahren zu verwenden zum Betrieb eines Lackierroboters, der eine durch Stopfen unterteilte Lackrohrleitung enthält. Bei dieser so genannten Molchlösung wird ein bestimmtes Volumen an Lack aus dem Farbmischraum der Lackieranlage in die zum Roboter führende Lackrohrleitung gedrückt. Dieses Volumen ist so zu wählen, dass die für den jeweiligen Lackiervorgang benötigte Lackmenge mindestens in der Rohrleitung als Lacksäule enthalten ist. Den Abschluss der Lacksäule bildet ein so genannter Molch, das heißt, eine Art Korken mit exakt dem Innendurchmesser des Rohres. Anschließend an die Lacksäule für die eine Farbe kann bereits - wieder durch Molch getrennt - die nächste Farbe in der gewünschten Quantität in die Rohrleitung gefüllt werden. Die vorhandenen Molche können insbesondere auch die Aufgabe der elektrischen Isolation wahrnehmen und somit eine Potentialtrennung ermöglichen.

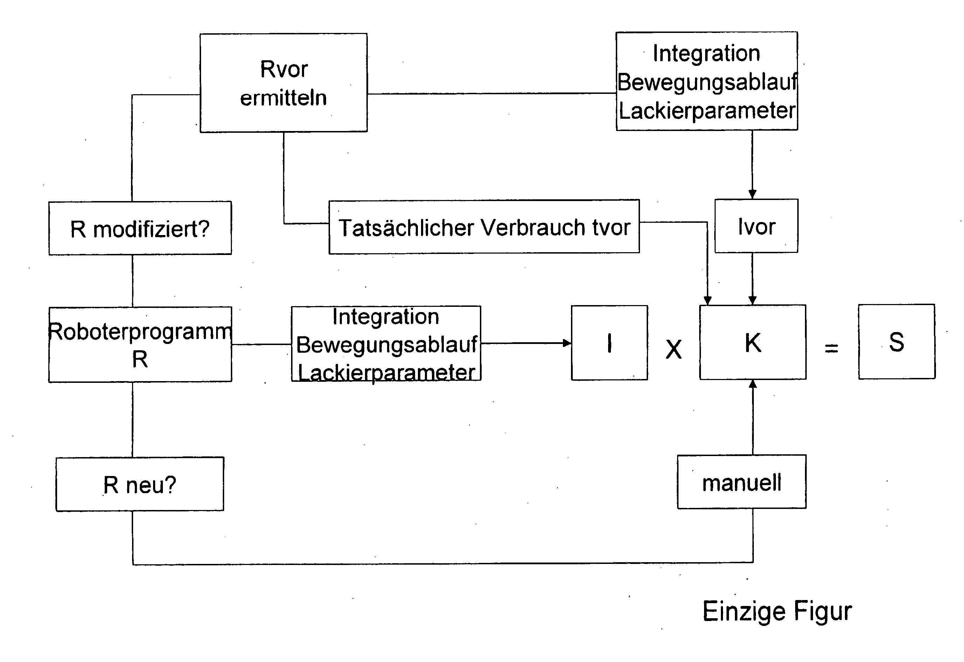

Im Folgenden wird das Verfahren zur Ermittlung der Lackmenge anhand der Figur näher erläutert:

Für ein aktuelles Roboterprogramm R, das einem bestimmten Lackiervorgang entspricht, wird durch einen Integrationsprozess, der sowohl den Bewegungsablauf als auch die Lackierparameter des Roboterprogramms berücksichtigt, bei dem jedoch die Kinematik des Roboters nicht berücksichtigt wird, ein Integrationswert I ermittelt.

Zudem wird eine Entscheidung getroffen, ob das aktuelle Roboterprogramm R ein völlig neues Roboterprogramm ist oder ob es die Modifikation eines Vorläufer-Roboterprogramms Rvor darstellt. Für den Fall, dass es sich um ein neues Roboterprogramm handelt, wird ein manueller Korrekturfaktor K ermittelt, der durch Multiplikation mit dem Integrationswert den Startwert S für das lernfähige System bildet.

Für den Fall, dass das aktuelle Roboterprogramm R ein modifiziertes Roboterprogramm darstellt, wird das dem aktuellen Roboterprogramm R am nächsten liegende Vorläufer-Roboterprogramm Rvor ermittelt. Im einfachsten Fall wird das Vorläufer-Roboterprogramm als das unmittelbar vorangegangene Programm ermittelt. Nachdem das Vorläufer-Roboterprogramm, das heißt also die Vorversion des aktuellen Roboterprogramms R vorliegt, wird ein Integrationswert Ivor aus einer Berechnung, wie sie in entsprechender Weise für das aktuelle Roboterprogramm R durchgeführt wurde, ermittelt. Das heißt, die Berechnung erfolgt unter Berücksichtigung von Bewegungsablauf und Lackierparametern, jedoch ohne Kinematik. Der Integrationswert Ivor kann entweder bei Bedarf berechnet werden oder er liegt bereits in einer Datenbank vor.

Ebenfalls wird, beispielsweise aus einer Datenbank der tatsächliche Lackverbrauch tvor für die Vorversion ermittelt. Der Startwert S für die neue Lernphase des aktuellen Roboterprogramms R ergibt sich dann aus:

$$S = I \times t_{vor}/I_{vor}.$$

<u>Bezugszeichenliste</u>

| | |
|---|---|
| K | Korrekturfaktor |
| R | Roboterprogramm |
| Rvor | Vorläufer-Roboterprogramm |
| I | Integrationswert |
| Ivor | Vorläufer-Integrationswert |
| S | Startwert |
| tvor | tatsächlicher Verbrauch Vorversion |

**Patentansprüche**

1.  Verfahren zur Ermittlung einer benötigten Lackmenge für den Lackiervorgang eines Lackierroboters mit folgenden Schritten:

    a) in einem Integrationsvorgang wird aus dem Bewegungsablauf des Lackierroboters und den Lackierparametern ein Integrationswert (I) für die Lackmenge ermittelt;
    **gekennzeichnet durch** den Schritten:
    b) es wird ein Korrekturfaktor (K) ermittelt, der die Kinematik des Lackierroboters berücksichtigt,
    c) aus dem Integrationswert (I) und dem Korrekturfaktor (K) wird ein Startwert (S) als Grundlage für den Start eines lernfähigen Systems gebildet,
    d) der Startwert (S) wird einem lernfähigen System zugeführt, welches als System auf der Basis wenigstens eines künstlichen neuronalen Netzes ausgebildet ist und die benötigte Lackmenge ermittelt.

2.  Verfahren nach Anspruch 1,
    wobei vor Bildung des Startwertes eine Entscheidung getroffen wird, die den Lackiervorgang zu zeitlich vorangegangenen Lackiervorgängen in Beziehung setzt, wobei der Lackiervorgang entweder

    i) lediglich eine Modifikation irgendeines vorangegangenen Lackiervorgangs oder
    ii) ein neuer Lackiervorgang ist.

3.  Verfahren nach Anspruch 2,
    wobei im Fall i) der Korrekturfaktor (K) ermittelt wird aus der tatsächlich benötigten Lackmenge des vorangegangenen Lackiervorgangs.

4.  Verfahren nach Anspruch 3,
    wobei der Korrekturfaktor (K) ermittelt wird aus der tatsächlich benötigten Lackmenge und der in einem Integrationsvorgang berechneten Lackmenge des vorangegangenen Lackiervorgangs.

5.  Verfahren nach Anspruch 2,
    wobei im Fall ii) der Korrekturfaktor (K) manuell ermittelt wird.

6.  Verfahren nach Anspruch 4,
    wobei der Korrekturfaktor (K) gebildet wird als Quotient aus den beiden Lackmengen.

7.  Verfahren nach einem der Ansprüche 1 bis 6,
    wobei in Schritt b) die Soll-Bewegungswerte des Lackierroboters ohne Berücksichtigung der Kinematik zu Grunde gelegt werden.

8.  Verwendung eines Verfahrens nach einem der Ansprüche 1 bis 7 zum Betrieb eines Lackierroboters, der befüllte Lackkartuschen enthält.

9.  Verwendung des Verfahrens nach einem der Ansprüche 1 bis 7 zum Betrieb eines Lackierroboters, der eine durch Stopfen unterteilte Lackrohrleitung enthält.

**Claims**

1.  Method for determining a required paint quantity for the paint-spraying operation of a paint-spraying robot, comprising the following steps:

    a) in an integration operation, from the motional sequence of the paint-spraying robot and the paint-spraying parameters, an integration value (I) for the paint quantity is determined,
    **characterized by** the steps:
    b) a correction factor (C) is determined, which gives due regard to the kinematics of the paint-spraying robot,
    c) from the integration value (I) and the correction factor (C) a start value (S) is formed as the basis for the start of an adaptive system,
    d) the start value (S) is fed to an adaptive system, which is formed as a system based on at least one artificial neuronal network and determines the required paint quality.

2.  Method according to Claim 1, wherein prior to the formation of the start value, a decision is taken which relates the paint-spraying operation to predating paint-spraying operations, the paint-spraying operation being either:

    i) merely a modification of some preceding paint-spraying operation
    or

ii) a new paint-spraying operation.

3. Method according to Claim 2, wherein in case i) the correction factor (C) is determined from the actually required paint quantity of the preceding paint-spraying operation.

4. Method according to Claim 3, wherein the correction factor (C) is determined from the actually required paint quantity and the paint quantity, calculated in an integration operation, of the preceding paint-spraying operation.

5. Method according to Claim 2, wherein, in case ii), the correction factor (C) is determined manually.

6. Method according to Claim 4, wherein the correction factor (C) is formed as a quotient of the two paint quantities.

7. Method according to one of Claims 1 to 6, wherein in step b) the desired motional values of the paint-spraying robot are adopted as the working basis, without regard to the kinematics.

8. Use of a method according to one of Claims 1 to 7 to operate a paint-spraying robot containing filled paint cartridges.

9. Use of a method according to one of Claims 1 to 7 to operate a paint-spraying robot containing a paint pipeline divided by stoppers.

**Revendications**

1. Procédé pour déterminer une quantité de laque nécessaire pour l'opération de laquage d'un robot de laquage, comprenant les étapes suivantes :

   a) dans une opération d'intégration, on détermine à partir du déroulement du mouvement du robot de laquage et des paramètres de laquage une valeur d'intégration (I) pour la quantité de laque ;
   **caractérisé par** les étapes suivantes :
   b) on détermine un facteur de correction (K) qui tient compte de la cinématique du robot de laquage,
   c) à partir de la valeur d'intégration (I) et du facteur de correction (K), on forme une valeur de départ (S) en tant que base pour le départ d'un système intelligent,
   d) la valeur de départ (S) est acheminée à un système intelligent qui est réalisé en tant que système sur la base d'au moins un réseau neuronal artificiel et qui détermine la quantité de laque nécessaire.

2. Procédé selon la revendication 1, dans lequel, avant la formation de la valeur de départ, on effectue une décision qui met en relation l'opération de laquage avec des opérations de laquage ayant eu lieu préalablement, l'opération de laquage étant

   i) soit seulement une modification d'une opération de laquage quelconque précédente,
   ii) soit une nouvelle opération de laquage.

3. Procédé selon la revendication 2, dans lequel :

   dans le cas i), le facteur de correction (K) est déterminé à partir de la quantité de laque effectivement nécessaire de l'opération de laquage préalable.

4. Procédé selon la revendication 3, dans lequel le facteur de correction (K) est déterminé à partir de la quantité de laque effectivement nécessaire et de la quantité de laque de l'opération de laquage préalable calculée dans une opération d'intégration.

5. Procédé selon la revendication 2, dans lequel, dans le cas ii), le facteur de correction (K) est déterminé manuellement.

6. Procédé selon la revendication 4, dans lequel le facteur de correction (K) est formé en tant que quotient des deux quantités de laque.

7. Procédé selon l'une quelconque des revendications 1 à 6, dans lequel, dans l'étape b), les valeurs de déplacement de consigne du robot de laquage sont prises pour base sans tenir compte de la cinématique.

8. Utilisation d'un procédé selon l'une quelconque des revendications 1 à 7, pour faire fonctionner un robot de laquage qui contient des cartouches remplies de laque.

9. Utilisation du procédé selon l'une quelconque des revendications 1 à 7 pour faire fonctionner un robot de laquage qui contient une conduite de laque divisée par des bouchons.

Einzige Figur

**EP 1 862 269 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1252935 A2